# EUROPÄISCHE PATENTSCHRIFT

(11) **EP 2 102 465 B1**
(45) Veröffentlichungstag und Bekanntmachung des Hinweises auf die Patenterteilung: **10.08.2016**
(21) Anmeldenummer: 07822835.0
(22) Anmeldetag: 23.11.2007
(51) Int. Cl.: F01N 3/20, F01N 11/00, F02D 41/20

(54) **VORRICHTUNG UND VERFAHREN ZUR STEUERUNG EINES ELEKTROMAGNETISCHEN VENTILS**
DEVICE AND METHOD FOR CONTROLLING AN ELECTROMAGNETIC VALVE
DISPOSITIF ET PROCÉDÉ DE COMMANDE D'UNE SOUPAPE ÉLECTROMAGNÉTIQUE

(30) Priorität: 14.12.2006 DE 102006059625
(43) Veröffentlichungstag der Anmeldung: 23.09.2009
(73) Patentinhaber: Robert Bosch GmbH, 70442 Stuttgart (DE)
(72) Erfinder: KALUZA, Jan, 71034 Boeblingen (DE); KLEINKNECHT, Horst, 74427 Fichtenberg (DE)
(86) Internationale Anmeldenummer: PCT/EP2007/062737
(87) Internationale Veröffentlichungsnummer: WO 2008/071533

(56) Entgegenhaltungen:
- EP-A- 1 843 028
- EP-A2- 0 785 350
- WO-A-02/33241
- WO-A-03/074338
- DE-A1- 10 309 609
- DE-A1- 10 321 503
- JP-A- S5 619 767
- JP-A- H08 132 914
- JP-A- 2006 313 823
- US-A- 4 636 620

## Beschreibung

### Stand der Technik

Die Erfindung betrifft ein Verfahren und eine Vorrichtung zur Steuerung eines elektromagnetischen Ventils, insbesondere in einem Kraftfahrzeug.

Zur Dosierung von Flüssigkeiten, wie beispielsweise Kraftstoff und/oder Flüssigkeiten, die in Verbindung mit einer Abgasnachbehandlung verwendet werden, wie beispielsweise einer wässrigen Harnstofflösung, werden üblicherweise elektromagnetische Ventile eingesetzt. Insbesondere bei der Verwendung in einem Abgasnachbehandlungssystem sind diese Ventile einer sehr hohen Temperaturbelastung ausgesetzt. Dies erschwert die genaue Zumessung der zu dosierenden Flüssigkeit, da sich die Dosiermenge bei einer Temperaturänderung ebenfalls ändert. Ist keine Diagnose vorgesehen, so ist der Zustand des Ventils unklar. So hat die Steuereinheit üblicherweise keine Information dahingehend, ob das Ventil überlastet ist, ob es blockiert ist oder ob die abgegebene Menge der gewünschten Menge an zu dosierender Flüssigkeit entspricht. Üblicherweise ist vorgesehen, dass diese Bedingungen abgeschätzt und ausgehend von dieser Abschätzung eine entsprechende Steuerung vorgesehen ist, die diesen Effekten entgegenwirkt.

JP2006313823A offenbart ein Verfahren zur Steuerung eines elektromagnetischen Ventils, wobei die Temperatur des Ventils erfasst wird. Wenn die maximale Ventiltemperatur überschritten wird, wird eine zur Temperaturabsenkung erforderliche Absenkung berechnet und die Ansteuerungsanforderung wird um die erforderliche Absenkung abgesenkt. EP0785350A offenbart eine Änderung der Ansteuerdauer bei zu hoher Temperatur der Düsenspitze des Ventils, indem der Kraftstoffdruck gesenkt wird. Damit die gleiche Menge eingespritzt werden kann, muss das Ventil länger öffnen und die Kühlung durch den Kraftstoffstrom erfolgt über einen längeren Zeitraum, wodurch die Temperatur der Düsenspitze abnimmt.

### Offenbarung der Erfindung

### Vorteile der Erfindung

Mit der erfindungsgemäßen Vorrichtung sind ein sicherer Betrieb und eine Diagnose eines elektromagnetischen Ventils möglich. Insbesondere kann der Einfluss der Temperatur auf die Dosierung berücksichtigt und eine mögliche Beschädigung des Ventils frühzeitig erkannt und vermeiden werden. Ferner können die Bewegungsabläufe des Ventils, insbesondere der Ventilnadel, ermittelt und zur genauen Steuerung des Ventils und damit einer genauen Dosierung der Flüssigkeit verwendet werden. Diese Vorteile ergeben sich dadurch, dass die Temperatur des Ventils erfasst und bei der Ansteuerung und/oder bei der Bestromung des Ventils berücksichtigt wird.

Erfindungsgemäß erfolgt die Bestromung temperaturoptimiert. Dadurch kann eine unerwünschte oder gar unzulässige Erwärmung des Ventils vermieden werden. Im Rahmen der temperaturoptimierten Bestromung ist vorgesehen, dass die Bestromung derart erfolgt, dass eine möglichst geringe Erwärmung des Ventils erfolgt. Dabei wird in Kauf genommen, dass sich das Dosierverhalten des Ventils verschlechtert. So kann insbesondere ein verzögertes Öffnen und Schließen des Ventils auftreten.

Erfindungsgemäß werden diese Änderungen, die durch die temperaturoptimierte Ansteuerung verursacht werden durch eine geänderte Ansteuerung reduziert. So kann ein verzögertes Öffnen durch eine längere Bestromung kompensiert werden.

Durch Auswerten des Stroms, der durch das Ventil fließt, und der Spannung, die am Ventil anliegt, ist eine einfache Widerstandsmessung und damit Temperaturerfassung möglich.

### Kurze Beschreibung der Zeichnung

Ausführungsbeispiele der Erfindung sind in den Zeichnungen dargestellt und in nachfolgender Beschreibung näher erläutert. Es zeigen
- Figur 1: ein Blockdiagramm der wesentlichen Elemente der erfindungsgemäßen Vorrichtung,
- Figur 2: den über der Zeit aufgetragenen Strom, der durch das Ventil fließt und
- Figur 3: eine detaillierte Darstellung der erfindungsgemäßen Vorrichtung.

### Ausführungsformen der Erfindung

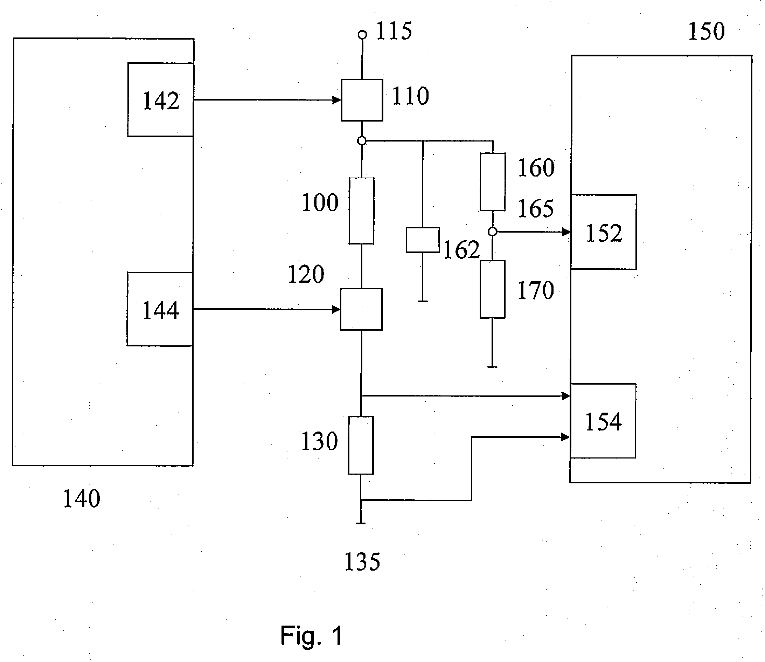

In der Figur 1 sind die wesentlichen Elemente einer Vorrichtung zur Steuerung eines
elektromagnetischen Ventils dargestellt. Das Ventil ist mit 100 bezeichnet. Dieses steht über ein erstes Schaltmittel 110, das auch als High-Side-Schalter bezeichnet wird, mit einem ersten Anschluss einer Spannungsversorgung 115 in Verbindung. Ferner steht das Ventil 100 über ein zweites Schaltmittel 120, das auch als Low-Side-Schalter bezeichnet wird, und ein Strommessmittel 130 mit einem zweiten Anschluss 135 der Spannungsversorgung in Verbindung.

Das erste Schaltmittel 110 wird von einer Stromsteuerung 142 und das zweite Schaltmittel von einer Zumesssteuerung 144 angesteuert. Die Stromsteuerung 142 und die Zumesssteuerung 144 sind die wesentlichen Elemente einer Steuerung 140. Prinzipiell kann auch vorgesehen sein, dass die Zumesssteuerung das erste Schaltmittel 110 und die Stromsteuerung das zweite Schaltmittel 120 ansteuert. In diesem Fall ist auch die Anordnung verschiedener weiterer Elemente, wie zum Beispiel dem Strommessmittel 130 und der Freilaufmittel und/oder Löschmittel, abzuändern.

An einem Verbindungspunkt, zwischen dem Ventil 100 und dem ersten Schaltmittel 110, ist ein Spannungsteiler, bestehend aus einem ersten Widerstand 160 und einem zweiten Widerstand 170, mit dem zweiten Anschluss der Versorgungsspannung verbunden. Ferner steht dieser Punkt über eine Freilaufdiode 162 mit dem zweiten Anschluss der Versorgungsspannung in Verbindung. Der Verbindungspunkt 165 beaufschlagt eine Spannungserfassung 152 mit einem Signal.

Bei einer vereinfachten Ausführungsform ist vorgesehen, dass der Spannungsteiler entfällt und die Spannung am Anschluss 115 der Spannungsversorgung abgegriffen wird.

Die beiden Anschlüsse des Strommessmittels 130, das vorzugsweise als Ohmscher Widerstand ausgebildet ist, gelangen zu einer Stromerfassung 154. Die Spannungserfassung 152 und die Stromerfassung 154 bilden die wesentlichen Elemente einer Auswertung 150.

In dem dargestellten Ausführungsbeispiel wird das Ventil über eine High-Side-/Low-Side-Endstufe angesteuert. Dabei erfolgt die Bestromung des ersten Schaltmittels im Sinne einer Stromsteuerung und/oder Stromregelung. Das heißt die Bestromung des ersten Schaltmittels 110 ist derart gewählt, dass durch das Ventil ein vorgegebener Strom fließt. Die Regelung des Stroms durch das Ventil wird beispielsweise durch ein veränderbares Puls-Pause-Verhältnis eines Pulsweitenmodulierten Signals mit einer bestimmten Frequenz bestimmt.

Dies bedeutet die Stromsteuerung 142 steuert das erste Schaltmittel derart an, dass sich die gewünschte Bestromung des Ventils ergibt. Die Bestromung ist im wesentlichen definiert durch die Stromwerte in den einzelnen Phasen, insbesondere durch den Anzugstrom zwischen den Zeitpunkten T2 und T3 und/oder den Haltestrom in der Haltephase zwischen den Zeitpunkten T4 und T5. Ferner ist die Bestromung durch die Stromanstiege und Stromabfälle in den übrigen Phasen definiert.

Durch die Zumesssteuerung 144 wird das zweite Schaltmittel derart angesteuert, dass die Zumessung zu einem bestimmten Zeitpunkt beginnt und zu einem bestimmten Zeitpunkt endet und damit eine bestimmte Menge an Flüssigkeit zu einem bestimmten Zeitpunkt zugemessen wird. Diese Zeitpunkte und diese Zeitdauer der Zumessung werden von einer übergeordneten Steuerung, abhängig vom Betriebszustand der Brennkraftmaschine bzw. vom Zustand eines Abgasnachbehandlungssystems, vorgegeben. Durch die Zumesssteuerung 144 werden im wesentlichen die Zeitpunkte, bei denen die Bestromung beginnt und/oder endet gesteuert.

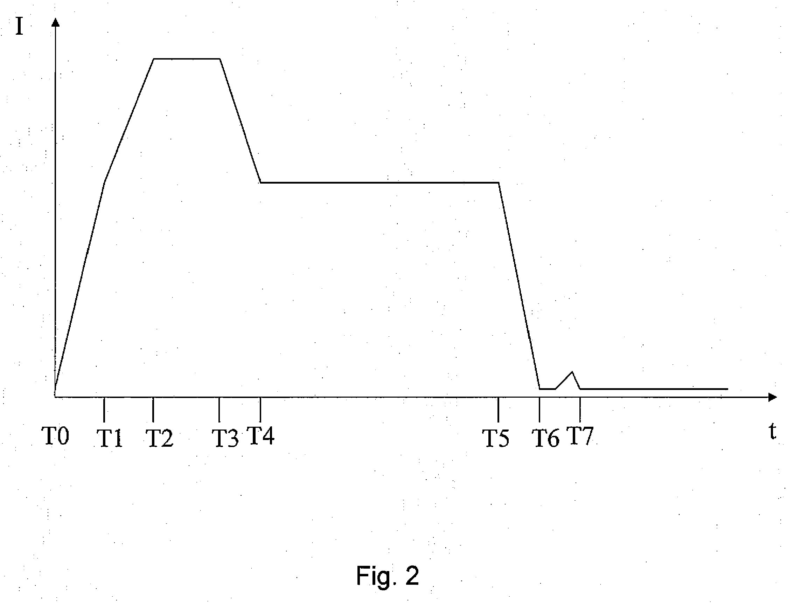

Von der Auswerteschaltung 150 werden der Strom I, der durch das Ventil fließt, sowie die an dem Ventil anliegende Spannung U erfasst und ausgewertet. In Figur 2 ist beispielhaft der Stromverlauf einer Bestromung während eines Zumesszyklusses, das heißt einer Zumessung von Flüssigkeit mittels des Ventils, dargestellt. Zum Zeitpunkt T0 beginnt die Bestromung des Ventils. Das heißt sowohl der High-Side- als auch der Low-Side-Schalter werden geschlossen. Der Strom steigt bis zum Zeitpunkt T2 an. Zum Zeitpunkt T2 erreicht der Strom ein erstes Stromniveau, das auch als *Anzug*sstromniveau bezeichnet wird. Dieses Stromniveau ist derart gewählt, dass das Ventil sicher in die neue Endlage übergeht. Zum Zeitpunkt T1 erreicht das Ventil seine neue Endlage. Dies hat zur Folge, dass sich die Induktivität des Ventils ändert und damit ändert sich auch der Stromanstieg. Ausgehend von dieser Änderung der Induktivität und der damit verbundenen Änderung des Anstiegs des Stroms bei konstanter Spannung kann dieser Zeitpunkt T1 durch Auswerten des Stromverlaufs erkannt werden. Bis zum Zeitpunkt T3 wird der Strom durch das erste Schaltmittel derart gesteuert, dass es auf seinem Ansteuerniveau verbleibt.

Zwischen dem Zeitpunkt T2 und T3 befindet sich die Spule in ihrer Sättigung. In diesem Bereich wird vorzugsweise die Spulentemperatur, ausgehend von dem fließenden Strom und der anliegenden Spannung, mittels des Ohmschen Gesetzes berechnet. Hierzu ist erforderlich, dass sowohl die Spannung, die an der Spule anliegt, als auch der Strom, der durch die Spule fließt, bekannt sind.

Zwischen dem Zeitpunkt T3 und T4 fällt der Strom auf den Haltestrom der Spule ab. Dieser Wert ist so gewählt, dass das Ventil in seiner Position verbleibt. Dies bedeutet, das Ventil wird offen gehalten und durch das erste Schaltmittel wird der Strom so eingestellt, dass der Strom wiederum nahezu konstant bleibt. Durch die Absenkung des Stroms aus dem Haltestrom wird die Verlustleistung am Ventil abgesenkt und das Ventil wird nicht überhitzt.

Zum Zeitpunkt T5 endet die Bestromung, das heißt beide Schaltmittel werden geöffnet und der Strom fällt bis zum Zeitpunkt T6 auf den Wert Null ab. Aufgrund der mechanischen Trägheit benötigt die Ventilnadel noch eine gewisse Zeit, bis diese wieder ihre ursprüngliche Lage erreicht. Auch dieser Zeitpunkt kann wieder durch eine Auswertung des Stromverlaufs erfasst werden. Diese Ermessung erfolgt ähnlich wie bei Ermittlung des Schaltzeitpunktes zum Zeitpunkt T1. Nach dem Zeitpunkt T7 nimmt der Strom üblicherweise den Wert Null bzw. einen anderen definierten Wert an. Ab diesem Zeitpunkt können die Offset-Werte und die Messreihen abgeglichen werden. Nach dem Zeitpunkt T7 endet der Zumesszyklus.

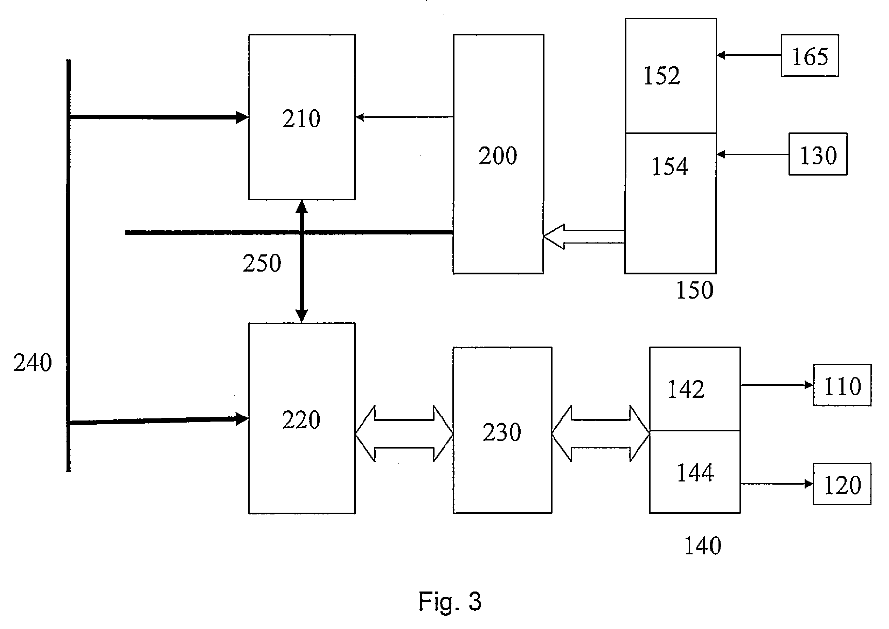

In Figur 3 ist die Steuereinheit für das Ventil, die die Steuerung 140 und die Auswertung 150 umfasst, detaillierter dargestellt. Bereits in Figur 1 dargestellte Elemente sind mit entsprechenden Bezugszeichen bezeichnet. Die dargestellt Steuereinheit kann als Hardwareeinheit, oder als Steuerverfahren, das von einem Prozessor abgearbeitet wird oder als Mischform realisiert sein.

Die an dem Verbindungspunkt 165 anliegende Spannung bzw. die an dem Strommessmittel 130 anliegende Spannung gelangen zu der Spannungserfassung 152 bzw. der Stromerfassung 154. Die Stromerfassung und die Spannungserfassung sind bevorzugt als A/D-Wandler ausgebildet, die die momentan anliegenden Signale in ein digitales Signal umwandeln, das dem jeweiligen Spannungswert bzw. Stromwert entspricht.

Von einen DMA 200, der auch als Direkt-Memory-Access bezeichnet werden kann, werden die Stromwerte und/oder Spannungswerte, die von der Stromerfassung 154 bzw. der Spannungserfassung 152 erfasst wurden, in einen Speicher 210 eingeschrieben. Bevorzugt ist vorgesehen, dass das DMA 200 als Programmstruktur realisiert ist.

Ferner ist bevorzugst vorgesehen, dass der erste Speicher 210, der zweite Speicher und ein nicht dargestellter Rechner, der die Programme abarbeitet, in den Prozessor integriert ist.

Um Daten auszutauschen stehen der erste Speicher 210, der DMA 200 und ein zweiter Speicher 220 über einen Datenbus 250 untereinander in Verbindung. Der erste Speicher 210 und der zweite Speicher 220 sind ferner mit einem Adressbus 240 verbunden. Der zweite Speicher 220 tauscht mit einer State-Machine 230 Signale aus. Diese beaufschlagt wiederum die Stromsteuerung 142 und die Zumesssteuerung 144 mit entsprechenden Signalen.

Die in dem zweiten Speicher 220 abgelegten Daten gelangen über die State-Machine 230 zu der Steuerung 140, die die Schaltmittel 110 und 120 entsprechend ansteuert.

Die A/D-Wandler 152, 154 und das DMA 200 können auch als Einlesemittel bezeichnet werden. Die State-Machine 230 und die Steuerung 140 können auch als Steuermittel bezeichnet werden. Die DMA 200, die State-Machine 230, die Auswertung 150 und die Steuerung 140 bilden zusammen ein Interface. Vorzugsweise sind diese Elemente Bestandteil eines Controllers.

Die eingehenden Werte bezüglich der Spannung U, die an dem Ventil anliegt, und/oder dem Strom I, der durch das Ventil fließt, werden durch die Spannungserfassung 152 bzw. die Stromerfassung 154 zeitgetriggert von einem analogen Signal in ein digitales Signal gewandelt. Die Digitalisierung erfolgt mittels Analog/Digital-Wandler, die die wesentlichen Elemente der Stromerfassung bzw. der Spannungserfassung bilden. Das DMA 200 schreibt die digitalisierten Signale zu bestimmten Zeitpunkten, d.h. zeitgetriggert in den ersten Speicher 210. In dem Speicher 210 ist somit der Signalverlauf der Spannung und/oder des Stroms über der Zeit bzw. über der Winkelstellung abgelegt. Dabei kann vorgesehen sein, dass alle Werte über den gesamten Zumesszyklus, das heißt vom Zeitpunkt T0 bis deutlich nach dem Zeitpunkt T7 in festen Abständen abgelegt sind.

Bei einer Ausgestaltung ist vorgesehen, dass lediglich einzelne Messfenster definiert sind, innerhalb denen die Messwerte in den ersten Speicher 210 eingelesen werden. Das heißt es werden die Messwerte nur in den Bereichen eingelesen, die von Interesse sind und deren Verlauf den Einspritzvorgang charakterisiert. Hierzu ist vorgesehen, dass ausgehen von dem erwarteten Zeitpunkt oder Winkelstellung bei dem das Ereignis voraussichtlich auftritt der Beginn und dass Ende des Messfenster definiert wird. So kann beispielsweise vorgesehen sein, dass als Beginn ein Zeitpunkt, der einen festen Wert vor dem erwarteten Zeitpunkt liegt als Beginn des Messfenster definiert wird. Als Ende des Messfenster wird ein Zeitpunkt der eine feste Zeit nach dem Beginn liegt, verwendet.

Bei einer weiteren Ausgestaltung kann auch vorgesehen sein, dass für eine bestimmten Zeitraum nur ein oder mehrer Werte abgelegt sind. So ist es ausreichend, wenn im Zeitraum zwischen T4 und T5 lediglich ein Wert abgelegt wird. Im Zeitraum zwischen dem Zeitpunkt T0 und T2 sind mehrere Werte abgelegt, damit der Zeitpunkt T1, bei dem sich die Induktivität der Spule ändert, sicher erkannt werden kann. Entsprechend sind auch mehrere Werte zwischen den Zeitpunkten T6 und T7 abgelegt, um durch die Analyse des Stromverlaufs das Schließen des Ventils zu erkennen.

Durch eine geeignete Ausbildung bzw. Programmierung des DMA 200 kann die Einrichtung an beliebige Verbraucher, Stromverläufe, Spannungsverläufe und damit Anwendungen angepasst werden. Das heißt es ergibt sich eine sehr flexible Einrichtung, die damit auch kostengünstig eingesetzt werden kann.

Ausgehend von diesen im ersten Speicher 210 abgelegten Stromwerten berechnet der nicht dargestellte Prozessor verschiedene Kenngrößen, die Dosierung von Flüssigkeiten mittels des Magnetventils charakterisieren. Dies bedeutet der Prozessor beinhaltet ein Auswertemittel, die ausgehend von den im ersten Speicher 210 abgelegten Verlauf für den Strom und/oder die Spannung eine Zustandsanalyse und/oder eine Verlaufsanalyse durchführen.

So ermittelt die Verlaufsanalyse beispielsweise den Zeitpunkt, ab dem das Ventil die Flüssigkeit fließen läst bzw. den Fluss der Flüssigkeit unterbindet ermittelt. Diese Zeitpunkte werden auch als Öffnungszeitpunkt oder BIP bzw. als Schließzeitpunkt oder EIP bezeichnet. Neben diesen Zeitpunkten können auch noch weitere für den Einspritzvorgang charakteristische Zeitpunkte aus dem Strom und/oder Spannungsverlauf ermittelt werden.

Die Zustandsanalyse ermittelt beispielsweise den Widerstand der Spule. Hierzu ist es lediglich erforderlich, dass ein Strom/Spannungswert zum geeigneten Zeitpunkt eingelesen wird. Aus dem Widerstand wird vorzugsweise die Temperatur der Spule als Temperaturgröße ermittelt werden. Ferner können verschiedene Stromwerte und/oder Spannungswerte erfasst werden um die ordnungsgemäße Funktion des Ventils zu überprüfen. Ein solcher weitere Wert ist die sogenannte Offsetspannung und/oder ein Offsetstrom, die am Ende oder kurz vor dem Zumesszyklus eingelesen werden. Ferner kann als weitere Größe der Wert des Haltestrom eingelesen werden.

Ausgehend von diesen Größen und weiteren Größen, die hier nicht näher ausgeführt sind, berechnet der Prozessor die Dosierung charakterisierende Größen. Hierzu umfasst der Prozessor Bewertungsmittel. Diese bewerten die Ergebnisse der Verlaufsanalyse und/oder der Zustandsanalyse. Weichen die ermittelten Werte von vorgegebenen Werten ab, so korrigiert der Prozessor wenigstens eine der Steuergrößen, die die Ansteuerung charakterisieren.

Bei dem in Figur 2 dargestellten Beispiel mit einem High-Side und einem Low-Side-Schater ist vorgesehen, dass einer der beiden Schalter zu Beginn des Zumesszyklus, das heißt zum Zeitpunkt T0 geschlossen, und zum Zeitpunkt T5 wieder geöffnet wird. Der zweite Schalter wird zum Zeitpunkt T0 für eine bestimmte Zeit, vorzugsweise bis zum Zeitpunkt T3 geschlossen und anschließend mit einem Pulsweitenmodulierten Signal, dass durch sein Tastverhältnis und seine Frequenz definiert ist, angesteuert. Vom Zeitpunkt T6 bis zum Zeitpunkt T7 wird der erste Schalter kurz geschlossen, damit der Schließzeitpunkt erfasst werden kann. Als Steuergrößen werden von dem Prozessor die Zeitpunkte ab denen die Bestromung beginnen und enden soll sowie das Tastverhältnis vorgegeben. Alternativ kann an Stelle des Endes auch die Dauer als Steuergröße vorgegeben werden. Diese die Dosierung charakterisierenden Größen werden von dem Prozessor in dem zweiten Speicher 220 abgelegt.

Ausgehend von diesen im zweiten Speicher abgelegten Werten berechnet die State-Machine 230 Steuergrößen zur Beaufschlagung der Schaltmittel 110 und 120. Dies erfolgt beispielsweise derart, dass die State-Machine ausgehend von dem Inhalt des zweiten Speichers 220 ein Verlauf über der Zeit oder der Winkelstellung des Zustandes der beiden Schaltmittel an die Steuerung 140 übermittelt. Die Steuerung 140 beaufschlagt dann die Schaltmittel 110 und 120 mit entsprechenden Ansteuersignalen. Diese State-Machine 230 und die Steuerung werden auch als Steuermittel bezeichnet und sind bei einer bevorzugten Ausgestalten in dem Controller enthalten.

Erfindungsgemäß ist folgeende Vorgehensweise vorgesehen. Die Endstufe bestehend aus wenigstens einem Schaltmittel wird über ein Interface von einem Prozessor angesteuert. In der beschriebenen Ausführungsform sind zwei Schaltmittel dargestellt, es kann auch nur ein Schaltmittel oder auch noch weitere Schaltmittel vorgesehen sein. Das Interface beinhaltet wenigstens einen Analog/Digital-Wandler sowie den DMA (Direkt Memory Access). Dieses Interface erfasst die Spannung und/oder den Strom und schreibt in den ersten Speicher des Prozessors den Verlauf der Spannung und/oder des Stroms ein. Ausgehend von einem gewünschten Ansteuerverlauf für das Ventil, der in dem zweiten Speicher des Prozessors abgelegt ist, bildet das Interface Ansteuersignale für die Schaltmittel. Der Prozessor wertet unabhängig von der Art der Endstufe die Signale aus und berechnet den gewünschten Ansteuerverlauf. Das Interface passt die Werte, die der Prozessor liefert oder benötigt an die Signale an, die die Endstufe benötigt oder liefert.

Dies bedeutet der Prozessor ist völlig unabhängig von der verwendeten Endstufe oder der verwendeten Spule. Entsprechendes gilt auch umgekehrt. Mit dem Prozessor kann jeder beliebige Verbraucher in jeder gewünschten Art und Weise angesteuert werden. Die Anpassung des Verbrauchers and den Prozessor und umgekehrt erfolgt über das Interface. Dieses muss an beide angepasst werden. Dass Interface beinhaltet lediglich Analog/Digital Wandler und eine kleine Recheneinheit, die die Funktion der DMA bzw. der State-Machine übernimmt.

Ventile werden häufig zur Dosierung von flüssigen Medien in Brennkraftmaschinen eingesetzt. Da diese Ventile häufig in Motornähe bzw. in der Nähe von heißen Bauteilen, wie im Abgastrakt, eingesetzt werden, ist die thermische Belastung dieser Bauelemente sehr groß. Diese thermische Belastung beruht zum einen auf der Erwärmung durch die Brennkraftmaschine oder ihr zugeordnete Elemente, wie dem Abgassystem, bzw. durch Eigenerwärmung durch die Bestromung des Ventils in dessen Spule. Durch die Erwärmung verändert sich zum einen der Innenwiderstand der Spule und zum anderen kann im Extremfall eine Beschädigung oder gar eine Zerstörung der Spule auftreten. Durch die Veränderung des Innenwiderstands der Spule verändert sich auch das dynamische Verhalten des Ventils, wodurch wiederum die Dosierung der Flüssigkeit beeinflusst wird.

Um dies zu vermeiden, ist nun vorgesehen, dass die Temperatur des Ventils erfasst wird und die Ansteuerung bzw. die Bestromung des Ventils, abhängig von der Temperatur des Ventils, erfolgt. Dabei ist vorgesehen, dass im statischen Zustand, das heißt insbesondere zwischen den Zeitpunkten T2 und T3, der Strom während der Bestromung gemessen wird. Die Spannung, die an dem Ventil anliegt, ist in diesem Zustand bekannt bzw. wird ebenfalls gemessen. Ausgehend von dem Strom und der Spannung wird dann der Innenwiderstand der Spule bestimmt. Ausgehend von dem Innenwiderstand und dem bekannten Innenwiderstand bei Raumtemperatur wird die Temperatur der Spule ermittelt. Hierzu kann beispielsweise ein Kennfeld vorgesehen sein, in dem die Spulentemperatur abhängig vom Innenwiderstand abgelegt ist. Alternativ kann vorgesehen sein, dass die Temperatur ausgehend von den erfassten Größen berechnet wird. Ausgehend von dieser abgelegten Temperatur bzw. direkt vom ermittelten Innenwiderstand wird nun die Ansteuerstrategie des Ventils verändert. Die Ansteuerstrategie wird zum einen in dem Sinne verändert, dass eine Beeinflussung der Temperatur erfolgt, zum anderen ist vorgesehen, dass die Ansteuerung derart verändert wird, dass die Einflüsse der Temperatur auf das Verhalten des Ventils kompensiert werden.

Zur Beeinflussung der Temperatur ist vorgesehen, dass die Bestromung temperaturoptimiert erfolgt. Dies ist beispielsweise dadurch möglich, dass in der Anzugsphase, das heißt bis zum Zeitpunkt T3, eine kleinere Spannung oder ein kleinerer Stromanstieg gewählt wird. Dadurch wird die Temperaturbelastung des Ventils geringer, im Gegenzug verlangsamt sich das Öffnen des Magnetventils. Durch verändern einzelner oder mehrere Größen, die die Bestromung bestimmen wird die Temperatur beeinflusst.

Das veränderte dynamische Verhalten des Ventils, aufgrund der höheren Temperatur, wird durch ein Verkürzen und/oder ein Verlängern der Ansteuerung kompensiert. Ferner ist vorgesehen, dass auch die Einflüsse auf das dynamische Verhalten, die auf der temperaturoptimierten Bestromung des Ventils beruhen, ebenfalls durch Änderung der Ansteuerung kompensiert werden. Dies erfolgt wiederum dadurch, dass die Ansteuerzeit entsprechend verlängert und/oder verkürzt wird.

Erfindungsgemäß ist vorgesehen, dass in bestimmten Betriebszuständen die Bestromung temperaturoptimiert erfolgt, das heißt die Bestromung erfolgt derart, dass möglichst wenig Verlustwärme entsteht. Insbesondere ist vorgesehen, dass eine solche temperaturoptimierte Bestromung erfolgt, wenn erkannt wird, dass die Temperatur größer als ein Schwellenwert ist bzw. dass der Innenwiderstand der Spule einen bestimmten Wert übersteigt. Dies ist besonders vorteilhaft, da eine temperaturoptimierte Bestromung üblicherweise zur Folge hat, dass sich die Schaltzeiten des Ventils oder andere, die dosierte Menge beeinflussende Größen verändern bzw. dass die Ansteuerung ungenauer wird. Daher erfolgt diese temperaturoptimierte Bestromung vorzugsweise nur dann, wenn sie notwendig ist.

Besonders vorteilhaft ist weiterhin, dass charakteristische Zeitpunkte und Stromwerte bei der Bestromung erfasst und bei der Ansteuerung berücksichtigt werden. So wird beispielsweise der Zeitpunkt, bei dem das Ventil öffnet, und/oder der Zeitpunkt, bei dem das Ventil schließt, erfasst. Diese beiden Zeitpunkte bestimmen wesentlich die dosierte Flüssigkeitsmenge. Durch Erfassen dieser Zeitpunkte kann die tatsächlich zugemessene Menge ermittelt werden. Weicht die Menge bzw. diese charakteristischen Werte von vorgegebenen Werten ab, erfolgt eine Korrektur der Ansteuerung, das heißt es erfolgt eine entsprechende Korrektur durch die Zumesssteuerung 144, das heißt die Zumessung wird verlängert, verkürzt und/oder um einen bestimmten Betrag verschoben. Durch diese Maßnahme werden zum einen Änderungen des Ventils, die auf der höheren Temperatur beruhen bzw. die auf einer temperaturoptimierten Bestromung beruhen, ermittelt und korrigiert. Dies bedeutet, ausgehend von den Werten für den Strom und/oder die Spannung werden die Zeitpunkte, bei denen das Ventil öffnet und/oder schließt, ermittelt. Diese Zeitpunkte werden dann zur Korrektur der Ansteuerung verwendet.

Insgesamt bedeutet dies, dass die Temperatur, insbesondere durch Auswerten des Stroms und der Spannung, die durch das Ventil fließt bzw. am Ventil anliegt, ermittelt und bei der Ansteuerung berücksichtigt wird. Dabei wird zum einen die Zumessung verändert, um Einflüsse zu korrigieren. Dies erfolgt vorzugsweise durch die Zumesssteuerung 144 und durch Steuerung des zweiten Schaltmittels 120. Ferner erfolgt eine temperaturoptimierte Bestromung abhängig von der Temperatur. Diese erfolgt vorzugsweise durch entsprechende Steuerung über die Stromsteuerung 142 durch Steuerung des ersten Schaltmittels 120.

## Patentansprüche

1. Verfahren zur Steuerung eines elektromagnetischen Ventils, wobei die Temperatur des Ventils erfasst wird, **dadurch gekennzeichnet, dass** die Bestromung des Ventils abhängig von der Temperatur des Ventils temperaturoptimiert derart erfolgt, dass möglichst wenig Verlustwärme entsteht, so dass eine möglichst geringe Erwärmung des Ventils erfolgt und dass durch die temperaturoptimierte Bestromung verursachte Änderungen durch eine geänderte Ansteuerung reduziert werden.

2. Verfahren nach Anspruch 1, **dadurch gekennzeichnet, dass** der Strom, der durch das Ventil fließt und/oder die Spannung, die über das Ventil abfällt, erfasst werden.

3. Verfahren nach Anspruch 2, **dadurch gekennzeichnet, dass**, ausgehend von den Werten für den Strom und/oder die Spannung, die Temperatur ermittelt wird.

4. Verfahren nach Anspruch 2, **dadurch gekennzeichnet, dass** ausgehend von den Werten für den Strom und/oder die Spannung, die Zeitpunkte, bei denen das Ventil öffnet und/oder schließt, ermittelt werden.

5. Verfahren nach Anspruch 4, **dadurch gekennzeichnet, dass** die Zeitpunkte zur Korrektur der Ansteuerung verwendet werden.

6. Verfahren nach Anspruch 1, **dadurch gekennzeichnet, dass** die temperaturoptimierte Ansteuerung und/oder Bestromung erfolgt, wenn die gemessene Temperatur und/oder der Innenwiderstand des Ventils einen Schwellenwert übersteigt.

7. Vorrichtung zur Steuerung eines elektromagnetischen Ventils, wobei die Temperatur des Ventils erfasst wird, mit einer Steuereinheit, **dadurch gekennzeichnet, dass** die Steuereinheit derart eingerichtet ist, dass die Bestromung des Ventils abhängig von der Temperatur des Ventils temperaturoptimiert derart erfolgt, dass möglichst wenig Verlustwärme entsteht, so dass eine möglichst geringe Erwärmung des Ventils erfolgt und dass durch die temperaturoptimierte Bestromung verursachte Änderungen durch eine geänderte Ansteuerung reduziert werden.

## Claims

1. Method for controlling an electromagnetic valve, wherein the temperature of the valve is detected, **characterized in that** current is applied to the valve depending on the temperature of the valve in a temperature-optimized manner in such a way that there is as little heat loss as possible, so that the valve is heated as little as possible, and that changes which are caused by the application of current in a temperature-optimized manner are reduced by a change in driving.

2. Method according to Claim 1, **characterized in that** the current which flows through the valve and/or the voltage which is dropped across the valve are/is detected.

3. Method according to Claim 2, **characterized in that** the temperature is ascertained on the basis of the values for the current and/or the voltage.

4. Method according to Claim 2, **characterized in that** the times at which the valve opens and/or closes are ascertained on the basis of the values for the current and/or the voltage.

5. Method according to Claim 4, **characterized in that** the times are used to correct the driving.

6. Method according to Claim 1, **characterized in that** driving and/or application of current are/is performed in a temperature-optimized manner when the measured temperature and/or the internal resistance of the valve exceed/exceeds a threshold value.

7. Apparatus for controlling an electromagnetic valve, wherein the temperature of the valve is detected with a control unit, **characterized in that** the control unit is designed in such a way that current is applied to the valve depending on the temperature of the valve in a temperature-optimized manner in such a way that there is as little heat loss as possible, so that the valve is heated as little as possible, and that changes which are caused by the application of current in a temperature-optimized manner are reduced by a change in driving.

## Revendications

1. Procédé de commande d'une électrovanne, la température de la vanne étant détectée, **caractérisé en ce que** l'alimentation électrique de la vanne est effectuée avec optimisation en température en fonction de la température de la vanne de telle sorte qu'il se produit aussi peu de pertes thermiques que possible, de sorte qu'il se produit un réchauffement aussi faible que possible de la vanne et que les modifications provoquées par l'alimentation électrique avec optimisation en température soient réduites par une excitation modifiée.

2. Procédé selon la revendication 1, **caractérisé en ce que** le courant qui circule à travers la vanne et/ou la tension qui chute aux bornes de la vanne sont détectés.

3. Procédé selon la revendication 2, **caractérisé en ce que** la température est déterminée à partir des valeurs du courant et/ou de la tension.

4. Procédé selon la revendication 2, **caractérisé en ce que** les instants auxquels la vanne s'ouvre et/ou se ferme sont déterminés à partir des valeurs du courant et/ou de la tension.

5. Procédé selon la revendication 4, **caractérisé en ce que** les instants sont utilisés pour la correction de l'excitation.

6. Procédé selon la revendication 1, **caractérisé en ce que** l'excitation et/ou l'alimentation électrique avec optimisation en température est effectuée lorsque la température mesurée et/ou la résistance interne de la vanne dépasse une valeur de seuil.

7. Dispositif (de commande d'une électrovanne, la température de la vanne étant détectée, comprenant une unité de commande, **caractérisé en ce que** l'unité de commande est conçue de telle sorte que l'alimentation électrique de la vanne est effectuée avec optimisation en température en fonction de la température de la vanne de telle sorte qu'il se produit aussi peu de pertes thermiques que possible, de sorte qu'il se produit un réchauffement aussi faible que possible de la vanne et que les modifications provoquées par l'alimentation électrique avec optimisation en température soient réduites par une excitation modifiée.
